# EUROPEAN PATENT APPLICATION

(11) **EP 4 567 085 A1**
(43) Date of publication of application: **11.06.2025**
(21) Application number: 23215180.3
(22) Date of filing: 08.12.2023
(51) Int. Cl.: C09J 5/00, C09J 4/06, C09J 7/10, C09J 9/02

(54) **ELECTROCHEMICALLY DEBONDABLE ADHESIVE FILM**

(71) Applicant: Henkel AG & Co. KGaA, 40589 Düsseldorf (DE)
(72) Inventor: Stricker, Lucas, 40211 Düsseldorf (DE); Sweeney, Nigel, Dublin, 6W (IE); Huehnergarth, Philipp, 47279 Duisburg (DE); Haberlin, Gavin, Naas, W91A0X8 (IE); Stapf, Stefanie, 42549 Velbert (DE); Mantout, Lola, 40210 Düsseldorf (DE)

(57) **Abstract**

The present disclosure is directed to a curable and electrochemically debondable film adhesive comprising: a) an ethylenically unsaturated monomer component, wherein said component comprises: a1) at least one (meth)acrylate-functionalized macromonomer; b) at least one radical generating initiator; c) at least one cure accelerator; d) at least one solid thermoplastic polyvinyl butyral resin; e) non-polymerizable electrolyte; and, optionally f) solubilizer.

## Description

### FIELD OF INVENTION

The present disclosure is directed to a bonded structure comprising an electrochemically debondable, cured film adhesive which is interposed between substrates which possess electrically conductive surfaces. More particularly, the present disclosure is directed to a curable film having utility in such a bonded structure.

### BACKGROUND TO THE INVENTION

Adhesive bonds and polymeric coatings are commonly used in the assembly and finishing of manufactured goods. They are used in place of mechanical fasteners, such as screws, bolts and rivets, to provide bonds with reduced machining costs and greater adaptability in the manufacturing process. Adhesive bonds distribute stresses evenly, reduce the possibility of fatigue and seal the joints from corrosive species.

Whilst adhesive bonds thus offer many advantages over mechanical fasteners, it tends to be difficult to disassemble adhesively bonded objects where this is required in practical applications. The removal of the adhesive through mechanical processes - such as by sand blasting or by wire brushing - is often precluded, in part because the adhesive is disposed between substrates and is thus either inaccessible or difficult to abrade without corrupting the substrate surfaces. Disassembly through the application of chemicals and / or high temperature - such as disclosed in US Patent No. 4,171,240 (Wong) and US Patent No. 4,729,797 (Linde et al.) - might be effective but can be time consuming and complex to perform: moreover, the aggressive chemicals and / or harsh conditions required can damage the substrates being separated, rendering them unsuitable for subsequent applications.

Noting these problems, certain authors have sought to develop electrochemically debondable adhesive compositions, wherein the passage of an electrical current through the cured compositions acts to disrupt the bonding at the interface of the adhesive and the substrate.

US Patent No. 7,465,492 (Gilbert) describes an electrochemically disbondable composition comprising: a matrix functionality comprising a monomer selected from the group consisting of acrylics, methacrylics and combinations thereof; a free radical initiator; and, an electrolyte, wherein the electrolyte provides sufficient ionic conductivity to said composition to support a faradaic reaction at a bond formed between the composition and an electrically conductive surface and thus allows the composition to disbond from the surface.

US 2007/0269659 (Gilbert) describes an adhesive composition disbondable at two interfaces, the composition: (i) comprising a polymer and an electrolyte; (ii) facilitating joinder of two surfaces; and, (iii) in response to a voltage applied across both surfaces so as to form an anodic interface and a cathodic interface, disbonding from both the anodic and cathodic surfaces.

EP 3 835 383 A1 (Henkel AG & Co. KGaA) discloses a bonded structure comprising a first material layer having an electrically conductive surface; and, a second material layer having an electrically conductive surface; wherein a curable and debondable one component (1K) adhesive composition is disposed between the first and second material layers. The curable and one component (1K) debondable adhesive composition comprises: a) epoxy resin; b) a curing agent for said epoxy resin; c) an electrolyte; and, d) an electrically non-conductive filler; wherein said composition comprises at least one of: e) a combination of a solubilizer and a toughener; and, f) electrically conductive particles.

EP 3 835 378 A1 (Henkel AG & Co. KGaA) discloses a bonded structure comprising a first material layer having an electrically conductive surface; a second material layer having an electrically conductive surface; wherein a cured debondable two-part hybrid adhesive composition is disposed between the first and second material layers. The curable and debondable two-part hybrid adhesive composition comprises a first part comprising: a) epoxy resin; b) (meth)acrylate monomer; c) an electrolyte; d) a solubilizer; and, e) a filler. The composition further comprises a second part comprising: a) a curing agent consisting of at least one compound possessing at least two epoxide reactive groups per molecule; b) an accelerator; and, c) a filler.

EP 3 835 386 A1 (Henkel AG & Co. KGaA) discloses a bonded structure comprising a first material layer having an electrically conductive surface; a second material layer having an electrically conductive surface; wherein a cured debondable two-part (2K) adhesive composition is disposed between the first and second material layers. The curable and debondable two-part (2K) adhesive composition comprise a first part comprising: a) epoxy resin; b) an electrolyte; and, c) optionally, a solubilizer. The second part comprises: a) a curing agent consisting of at least one compound possessing at least two epoxide reactive groups per molecule; and, b) an accelerator. The composition still further comprises an electrically non-conductive filler and, optionally a toughener.

The adhesives of such disclosures are applied to the surfaces to be bonded in liquid form, typically in molten form or as solvent-borne compositions. Whilst the bonding of surfaces using dry adhesive films - including but not limited to B-staged or partially cured adhesive films - is broadly known in the art, a dry-to-touch film of an electrochemically debondable composition having this utility is not known to the present inventors. In addition to permitting bonded structures to be disassembled by the application of a potential difference across the film, further advantages of such films would be realized, including the control of the thickness of the debondable adhesive and the capacity to generated bonded structures in a clean, hazard-free manner with minimum waste.

### STATEMENT OF THE INVENTION

In accordance with a first aspect of the present disclosure there is provided a curable and electrochemically debondable film adhesive comprising: a) an ethylenically unsaturated monomer component, wherein said component comprises: a1) at least one (meth)acrylate-functionalized macromonomer; b) at least one radical generating initiator; c) at least one cure accelerator; d) at least one solid thermoplastic polyvinyl butyral resin; e) non-polymerizable electrolyte; and, optionally f) solubilizer.

The curable film adhesive may desirably comprise, based on the weight of said curable film: from 20 to 90 wt.%, preferably from 20 to 80 wt.%, more preferably from 20 to 60 wt.% of a) said ethylenically unsaturated monomer component; from 0.1 to 10 wt.%, preferably from 0.1 to 5 wt.%, more preferably from 0.5 to 4 wt.% of b) said at least one radical generating initiator; from 0.1 to 5 wt.%, preferably from 0.1 to 3 wt.%, more preferably from 0.5 to 2 wt.% of c) said at least one cure accelerator; from 5 to 50 wt.%, preferably from 5 to 30 wt.%, more preferably from 5 to 20 wt.% of d) said at least one solid thermoplastic polyvinyl butyral resin; from 0.1 to 30 wt.%, preferably from 1 to 20 wt.%, more preferably from 3 to 15 wt.% of e) said non-polymerizable electrolyte; 0 to 10 wt.%, preferably from 0 to 5 wt.%, more preferably from 0 to 2 wt.% or from 0 to 5 wt.% off) said solubilizer.

In particular embodiments, the curable film comprises, based on the weight of said curable film, from 5 to 30 wt.%, preferably from 5 to 20 wt.% of a1) said at least one (meth)acrylate-functionalized macromonomer.

In other important embodiments of the disclosure, the or each polyvinyl butyral resin of the curable film adhesive is characterized by: a softening point of from 100 to 250°C; and, a weight average molecular weight (Mw) of from 40 to 170 kDa.

In important embodiments of the disclosure, said non-polymerizable electrolyte comprises or consists of a non-polymerizable salt of: ammonium; pyridinium; pyrrolidinium; phosphonium; imidazolium; oxazolium; guanidinium; or, thiazolium. Whilst a multiplicity of such non-polymerizable salts will be discussed herein as being suitable, good results have been obtained where said electrolyte is selected from the group consisting of: trihexyl(tetradecyl)phosphonium bis(trifluoromethylsulfonyl)imide; tributylmethylphosphonium bis(fluorosulfonyl) imide; tributylmethylphosphonium methyl sulfate; tributylmethylammonium bis(fluorosulfonyl)imide; N-propyl-N-methylpyrrolidinium bis(fluorosulfonyl) imide; 1-ethyl-3-methyl-1H-imidazol-3-um methyl sulfate; 1-ethyl-3-methyl-1H-imidazol-3-um methanesulfonate; 1-ethyl-3-methylimidazolium trifluoromethanesulfonate; 1-ethyl-3-methylimidazolium bis(trifluoromethylsulfonyl)imide; 1-butyl-3-methylimidazolium methyl sulfate; 1-butyl-3-methylimidazolium methanesulfonate; 1-butyl-3-methylimidazolium-fluorosulfonate; 1-butyl-3-methylimidazolium trifluoromethanesulfonate; 1-butyl-3-methylimidazolium bis(trifluoromethylsulfonyl)imide; 1-butyl-3-methylimidazolium bis(fluorosulfonyl)imide; 1-dodecyl-3-methylimidazolium bis(fluorosulfonyl)imide; and, mixtures thereof.

In accordance with a second aspect of the disclosure, there is provided an article (A) comprising a curable film as defined herein above and in the appended claims, wherein said film is disposed on a release liner and / or a carrier substrate. The article (A) may be a single-sided tape, a transfer tape or a double-sided tape.

The disclosure further provides a bonded structure comprising: a first substrate having an electrically conductive surface; and, a second substrate having an electrically conductive surface, wherein a cured film obtained from the curable film adhesive as defined herein above and in the appended claims is disposed between the electrically conductive surfaces of the first and second substrates. The cured film is electrochemically debondable.

A still further aspect of the present disclosure provides a method of debonding said bonded structure as defined herein above and in the appended claims, the method comprising the steps of: 1) applying a voltage across the electrically conductive surfaces to form an anodic interface and a cathodic interface; and, 2) debonding the surfaces. Effective debonding of the structures has been achieved where the voltage applied in step 1) is: from 0.5 to 200 V; and, applied for a duration of from 1 second to 60 minutes.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

As used herein, the singular forms "a", *"an"* and *"the"* include plural referents unless the context clearly dictates otherwise.

The terms *"comprising", "comprises"* and *"comprised* of' as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified. For completeness, the term *"comprising"* encompasses *"consisting of".*

The words *"preferred', "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"inner", "outer", "top", "back", "above", "below", "left", "right"* and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term *"plurality"* as used herein is defined as two or more than two.

The term *"fraction"* as used herein refers to a numerical quantity which defines a part up to but not including 100 percent or the entirety of the thing in question.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to* x" specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the curable film is located or in which a coating layer or the substrate for said coating layer is located.

The term *"liquid"* herein means in a liquid state at room temperature and at atmospheric pressure. Analogously, the term *"solid"* means in a solid state at room temperature and at atmospheric pressure. Solid state is defined as the state of matter in which materials are not fluid but retain their boundaries without support, the atoms or molecules occupying fixed positions with respect to each other and unable to move freely.

The molecular weights referred to in this specification can be measured with gel permeation chromatography (GPC) using polystyrene calibration standards, such as is done according to ASTM 3536.

Viscosities of the coating compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the coating compositions are done using the No. 6 spindle at a speed of 20 revolutions per minute for 1 minute until the viscometer equilibrates. The viscosity corresponding to the equilibrium reading is then calculated using the calibration.

Where mentioned, a calculated glass transition temperature ("T_{g}") of a polymer or co-polymer is that temperature which may be calculated by using the Fox equation (T. G. Fox, Bull. Am. Physics Soc., Volume 1, Issue No. 3, page 123(1956)). The glass transition temperatures of certain homo-polymers may be found in the published literature, such as in *"*Polymer Handbook", edited by J. Brandrup and E. H. Immergut, Interscience Publishers.

The actual glass transition temperature (T_{g}) of a polymer can be determined by differential scanning calorimetry (DSC). The use of DSC to determine T_{g} is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. The glass transition temperatures (T_{g}) specifically measured in the current patent application have been measured according to the methodology of Deutsches Institut für Normung (DIN) 11357.

The term *"softening point"* as used herein refers to the temperature at which a material, such as a polymer, loses its solid characteristics and becomes relatively fluid. A material's softening point as given herein is that temperature measured using the standard ball and ring method according to ISO 4625-1: 2004.

As used herein, the term *"release liner"* refers to a thin flexible sheet which, after being placed in intimate contact with an adhesive surface may be subsequently removed without damaging the adhesive coating. Illustrative materials of which the release liner may comprise or consist include: polyethylene; polypropylene; polyesters, such as polyethylene terephthalate (PET) and polybutylene terephthalate (PBT); cellulose acetate; polyvinylchloride; polyvinylidene fluoride; and, paper substrates coated or laminated with the aforementioned thermoplastics. For completeness, the coated papers or thermoplastic materials are often siliconized or otherwise treated with a release agent to impart improved release characteristics.

As is known in the art, release liners are typically left in place for storage and transport and only removed when a bonding operation is to be performed. The release liners thereby perform a number of functions, including preventing contamination of the composition, facilitating handling thereof, providing support thereto and providing for the conveyance of information or identifying data.

As used herein, the term *"carrier"* refers to a material onto which a curable film of an adhesive composition can be coated so as to stabilize the film. The carrier can add thickness to the article so as to improve handling. The carrier substrate differs from a release liner in that it cannot be removed from the curable film without deleteriously effecting the integrity of the curable film. The carrier may be flexible and may conventionally be selected from polymeric films, metal foils, foams, cloths, and combinations thereof. For example, the carrier substrate may be selected from the group consisting of polyester, polypropylene, polyethylene, foam and paper.

As used herein, the term *"transfer film"* refers to a film of adhesive which is not supported by a backing.

The term *"cure accelerator"* is intended herein to encompass any material which is a cure accelerator (or curing agent) for the (meth)acrylate functional compounds disclosed herein and, if applicable, for other ethylenically unsaturated monomers present in the composition. The accelerator may be of either the catalytic or reactive type.

As used herein the term *"electrochemically debondable"* means that, after curing of the adhesive, the bond strength can be weakened by at least 50% upon application of an electrical potential of 1V for a duration of 60 minutes. The cured adhesive is applied between two substrates which are bonded by said adhesive so that an electric current is running through the adhesive bond line. Bond strength is measured by Tensile Lap Shear (TLS) test performed at room temperature and based upon ASTM D3163-01 *Standard Test Method for Determining Strength of Adhesively Bonded Rigid Plastic Lap-Shear Joints in Shear by Tension Loading.* The bond overlapping area for this determination should be 2.5 cm x 1.25 cm (1" x 0.5") with a bond thickness of 0.1 cm (40 mil).

The term *"electrolyte"* is used herein in accordance with its standard meaning in the art as a substance containing free ions which can conduct electricity by displacement of charged carrier species. The term is intended to encompass molten electrolytes, liquid electrolytes, semi-solid electrolytes and solid electrolytes wherein at least one of the cationic or anionic components of their electrolyte structure is essentially free for displacement, thus acting as charge carrier.

The curable film adhesive of the present invention and the cured adhesive film obtained therefrom possess *"electrolyte functionality"* in that the adhesive material permits the conduction of ions, either anions, cations or both. The electrolyte functionality is understood to derive from the ability of the compositions and cured adhesives to solvate ions of at least one polarity.

The term *"faradaic reaction"* means an electrochemical reaction in which a material is oxidized or reduced.

As used herein, the term *"monomer"* refers to a substance that can undergo a polymerization reaction to contribute constitutional units to the chemical structure of a polymer. The term *"monomer"* herein encompasses macromonomers which, in accordance with IUPAC Gold Book are polymeric or oligomeric molecules possessing at least one reactive functional group: the macromonomer participates in a polymerization reaction and contributes a single monomer unit to the chain of the product polymer.

The term *"ethylenically unsaturated monomer"* as used herein, refers to any monomer containing a terminal double bond capable of polymerization under normal conditions of free-radical addition polymerization.

As used herein, *"(meth)acryf'* is a shorthand term referring to *"acryl"* and/or *"methacryl".* Thus the term *"(meth)acrylate"* refers collectively to acrylate and methacrylate.

As used herein, "*C₁-Cₙ alkyl"* group refers to a monovalent group that contains 1 to n carbons atoms, that is a radical of an alkane and includes straight-chain and branched organic groups. As such, a *"C₁-C₄ alkyl"* group refers to a monovalent group that contains from 1 to 4 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; and, tert-butyl. In the present invention, such alkyl groups may be unsubstituted or may be substituted with one or more halogen. Where applicable for a given moiety (R), a tolerance for one or more non-halogen substituents within an alkyl group will be noted in the specification.

The terms *"alkylene group"* refers to a divalent radical divalent radical formed by the removal of two hydrogen atoms from an alkyl group, which group may be substituted or unsubstituted and may optionally be interrupted by at least one heteroatom.

The term *"C₁-Cₙhydroxyalkyl"* as used herein refers to an HO-(alkyl) group having from 1 to n carbon atoms, where the point of attachment of the substituent is through the oxygen-atom and the alkyl group is as defined above.

An *"alkoxy group"* refers to a monovalent group represented by -OA where A is an alkyl group: nonlimiting examples thereof are a methoxy group, an ethoxy group and an iso-propyloxy group. The term *"alkoxylated"* as used herein means comprising at least one alkoxy group.

As used herein, *"C₂-C₆ alkenyl"* group refers to an aliphatic carbon group that contains 2 to 6 carbon atoms and at least one double bond disposed in any position. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having "cis" and "trans" configurations, or alternatively, "E" and "Z" configurations, as appreciated by those of ordinary skill in the art. In general, however, a preference for unsubstituted alkenyl groups containing from 2 to 6 (C₂-C₆) or from 2 to 4 (C₂-C₄) carbon atoms should be noted. And Examples of C₂-C₆ alkenyl groups include, but are not limited to: ethenyl; 1-propenyl; 2-propenyl; 1-methylethenyl; 1-butenyl; 2-butenyl; 4-methylbutenyl; 1-pentenyl; 2-pentenyl; 3-pentenyl; 4-pentenyl; 4-methyl-3-pentenyl; 1-hexenyl; 3-hexenyl; and, 5-hexenyl.

The term *"C₃-C₆ cycloalkyl"* as used herein means an optionally substituted, saturated cyclic hydrocarbon having 3-6 carbon atoms. In the present invention, such cycloalkyl groups may be unsubstituted or may be substituted with one or more halogen. Where applicable for a given moiety (R), a tolerance for one or more non-halogen substituents within a cycloalkyl group will be noted in the specification. Exemplary cycloalkyl groups include cyclopropyl, cyclobutyl, cyclopentyl or cyclohexyl groups.

As used herein, *"C₃-C₆ cycloalkylene"* means a divalent radical formed by the removal of two hydrogen atoms from one or more rings of a cycloalkyl group having from 3 to 6 carbon atoms.

As used herein, *"C₂-C₁₈ alkenyl"* refers to hydrocarbyl groups having from 2 to 18 carbon atoms and at least one unit of ethylenic unsaturation. The alkenyl group can be straight chained, branched or cyclic and may optionally be substituted with one or more halogen. Where applicable for a given moiety (R), a tolerance for one or more non-halogen substituents within an alkenyl group will be noted in the specification. The term *"alkenyl"* also encompasses radicals having *"cis"* and *"trans"* configurations, or alternatively, "*E*" and "Z" configurations, as appreciated by those of ordinary skill in the art. Examples of said C₂-C₂₀ alkenyl groups include, but are not limited to: -CH=CH₂; - CH=CHCH₃; -CH₂CH=CH₂; -C(=CH₂)(CH₃); -CH=CHCH₂CH₃; -CH₂CH=CHCH₃; - CH₂CH₂CH=CH₂; -CH=C(CH₃)₂; -CH₂C(=CH₂)(CH₃); -C(=CH₂)CH₂CH₃; -C(CH₃)=CHCH₃; - C(CH₃)CH=CH₂; -CH=CHCH₂CH₂CH₃; -CH₂CH=CHCH₂CH₃, -CH₂CH₂CH=CHCH₃; - CH₂CH₂CH₂CH=CH₂; -C(=CH₂)CH₂CH₂CH₃; -C(CH₃)=CHCH₂CH₃; -CH(CH₃)CH=CHCH_{;} - CH(CH₃)CH₂CH=CH₂; -CH₂CH=C(CH₃)₂; 1-cyclopent-1-enyl; 1-cyclopent-2-enyl; 1-cyclopent-3-enyl; 1-cyclohex-1-enyl; 1-cyclohex-2-enyl; and, 1-cyclohexyl-3-enyl.

As used herein, an *"C₆-C₁₈ aryl"* group used alone or as part of a larger moiety - as in *"aralkyl group"* - refers to monocyclic, bicyclic and tricyclic ring systems in which the monocyclic ring system is aromatic or at least one of the rings in a bicyclic or tricyclic ring system is aromatic. The bicyclic and tricyclic ring systems include benzofused 2-3 membered carbocyclic rings. In the present disclosure, such aryl groups may be unsubstituted or may be substituted with one or more halogen. Where applicable for a given moiety (R), a tolerance for one or more non-halogen substituents within an aryl group will be noted in the specification. Exemplary aryl groups include: phenyl; (C₁-C₄)alkylphenyl, such as tolyl and ethylphenyl; indenyl; naphthalenyl, tetrahydronaphthyl, tetrahydroindenyl; tetrahydroanthracenyl; and, anthracenyl.

The term *"arylene"* as used herein refers to a divalent radical counterpart of an aryl group. Further, as used herein, *"alkylaryl"* refers to alkyl-substituted aryl groups as set forth above. Moreover, as used herein *"aralkyl"* means an alkyl group substituted with an aryl radical as defined above.

The term *"hetero"* as used herein refers to groups or moieties containing one or more heteroatoms, such as N, O, Si and S. Thus, for example *"heterocyclic"* refers to cyclic groups having, for example, N, O, Si or S as part of the ring structure. *"Heteroalkyl", "heterocycloalkyl", "heteroaryl"* and *"heteroalkylaryl"* moieties are alkyl, cycloalkyl and aryl groups as defined hereinabove, respectively, containing N, O, Si or S as part of their structure.

The term *"heterocyclyl"* refers to a monovalent chain of carbon and heteroatoms, wherein the heteroatoms are selected from N, O, Si or S, a portion of which, including at least one heteroatom, form a ring.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### DETAILED DESCRIPTION OF THE INVENTION

The article of manufacture of the present disclosure will be described with reference to the appended drawings in which:
Figure 1 illustrates a single-sided tape absent a release liner according to an embodiment of the article of manufacture.
Figure 2 illustrates an embodiment of the article of manufacture that may correspond to a single-sided tape or a label with a release liner.
Figure 3 illustrates a transfer tape with one release liner according to an embodiment of the article of manufacture.
Figure 4 illustrates a transfer tape with two release liners according to an embodiment of the article of manufacture.
Figure 5 illustrates a double-sided tape with one release liner according to an embodiment of the article of manufacture.
Figure 6 illustrates a double-sided tape with two release liners according to an embodiment of the article of manufacture.

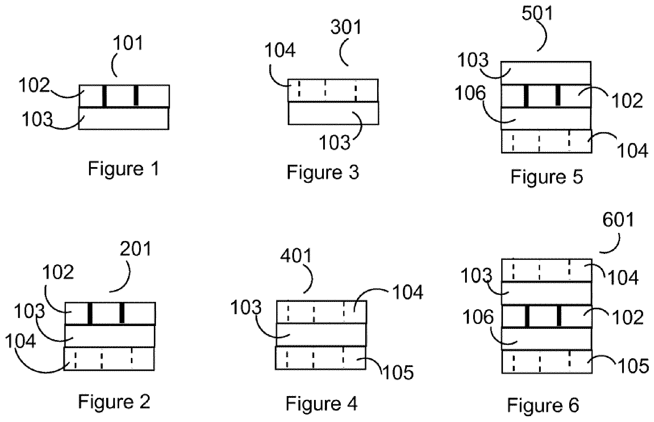

In Figure 1, a single sided tape (101) is shown which consists of a carrier (102) and a curable film (103). The embodiment depicted in Figure 2 could be either a single sided tape or a label (201), which tape or label consists of a carrier (102) and a curable adhesive film (103): the curable adhesive film (103) is covered with a release liner (104) to protect the curable film and prevent unwanted adhesion of the curable film (103).

Figures 3 and 4 depict transfer tapes which have particular utility for transferring the curable film from a release liner to a target surface (S¹, S²). In Figure 3, the transfer tape (301) consists of a release liner (104) coated with a curable adhesive film (103) as defined herein. The release liner (104) should have release properties on both sides but should not possess equivalent release properties on those sides: consequently, when winding and unwinding the transfer tape (301) from a roll - there will be a differentiation between the release effects on the two sides of the release liner (104).

In Figure 4, the transfer tape (401) consists of a curable film (103) as defined herein interposed between first (104) and second (105) release liners. The first (104) and second (105) release liners may have different release properties relative to the curable film which allows these liners (104, 105) to be removed independently of one another.

A double-sided adhesive tape (501) is depicted in Figure 5 and consists of a carrier (102) having a first curable film (103) on a first side of the carrier (102) and a second curable film (106) on a second side of the carrier (102). The first (103) and second (106) curable films may be the same of different in that they may be obtained from the same or different compositions subject to the proviso that at least one of said curable films is provided in accordance with the present disclosure. A release liner (104) covers and protects the second curable film (106), which liner (104) should have release properties on both sides but should not possess equivalent release properties on those sides. In these circumstances - when winding and unwinding the transfer tape (501) from a roll - there will be a differentiation between the release effects on the two sides of the release liner (104).

A second embodiment of a double-sided adhesive tape (601) is provided in Figure 6. The depicted tape (601) consists of a carrier (102) having a first curable film (103) on a first side of the carrier (102) and a second curable film (106) on a second side of the carrier (102). The first (103) and second (106) curable films may be the same of different, that is they may be obtained from the same or different compositions subject to the proviso that at least one of said curable films is provided in accordance with the present disclosure. A first release liner (104) covers and protects the first curable film (103). A second release liner (105) covers and protects the second curable film (106). The first (104) and second (105) release liners may have different release properties relative to the curable films (103, 106).

### CURABLE FILM ADHESIVE

The present disclosure provides in one aspect a curable film adhesive (103, 106) which may have utility in forming the article of manufacture. The curable film adhesive comprises: a) a monomer component consisting of ethylenically unsaturated monomers, which component comprises a1) at least one (meth)acrylate-functionalized macromonomer; b) at least one cure initiator; c) at least one accelerator; d) at least one solid thermoplastic polyvinyl butyral resin; e) non-polymerizable electrolyte; and, optionally f) solubilizer.

For surety, the weight percentages given below are based on the total weight of the curable film adhesive unless otherwise stated.

### a) Ethylenically Unsaturated Monomers

The curable film adhesive of present disclosure comprises ethylenically unsaturated monomers in an amount of from 20 to 90 wt.%, based on the total weight of the curable film, the (co-)polymerization of which monomers yields the matrix of the debondable adhesive. It is preferred that the composition comprises from 20 to 80 wt.% or from 20 to 60 wt.% of said ethylenically unsaturated monomers.

Such monomers can, in principle, be any ethylenically unsaturated monomer. However, the invention is particularly applicable to curable film adhesives of which (meth)acrylate monomers constitute at least 60 wt.%, preferably at least 75 wt.%, of the total weight of ethylenically unsaturated monomers present.

### a1) (Meth)acrylate-functionalized Macromonomer

The curable film adhesive of the present disclosure preferably comprises from 5 to 30 wt.%, more preferably from 5 to 20 wt.%, based on the total weight of the curable film, of a1) at least one (meth)acrylate-functionalized macromonomer. Said macromonomers may have one or more acrylate and/or methacrylate groups attached to the polymeric or oligomeric backbone, which (meth)acrylate functional groups may be in a terminal position on the macromonomer and / or may be distributed along the polymeric or oligomeric backbone thereof.

It is preferred that the or each (meth)acrylate functionalized macromonomer: i) has two or more (meth)acrylate functional groups per molecule; and / or, ii) has a weight average molecular weight (Mw) of from 300 to 100000 daltons, for example from 1000 to 90000 daltons.

Examples of such macromonomers, which may be used alone or in combination, include but are not limited to: (meth)acrylate-functionalized urethane macromonomers such as (meth)acrylate-functionalized polyester urethanes, (meth)acrylate-functionalized polyether urethanes and (meth)acrylate functionalized polyurea urethanes; (meth)acrylate-functionalized polyepoxide resins; (meth)acrylate-functionalized polybutadienes; (meth)acrylic polyol (meth)acrylates, which may be prepared from poly(meth)acrylates which carry OH groups; polyester (meth)acrylate macromonomers; polyamide (meth)acrylate macromonomers; polyurea (meth)acrylate macromonomers; poly(meth)acrylates of oxyalkane polyols, such as diethylene glycol di(meth)acrylate, dipropylene glycol di(meth)acrylate, triethylene glycol di(meth)acrylate, tetraethylene glycol di(meth)acrylate, dibutylene glycol di(meth)acrylate, di(pentamethylene glycol)dimethacrylate; and, polyether (meth)acrylate macromonomers, including polyethylene glycol di(meth)acrylates. Such (meth)acrylate-functionalized macromonomers and their methods of preparation are disclosed in *inter alia:* US Patent No. 4,574,138; US Patent No. 4,439,600; US Patent No. 4,380,613; US Patent No. 4,309,526; US Patent No. 4,295,909; US Patent No. 4,018,851; US Patent No. 3,676,398; US Patent No. 3,770,602; US Patent No. 4,072,529; US Patent No. 4,511,732; US Patent No. 3,700,643; US Patent No. 4,133,723; US Patent No. 4,188,455; US Patent No. 4,206,025; US Patent No. 5,002,976; and, US Patent No. 9,623,631.

In certain embodiments, component a1) may comprise or consist of at least one (meth)acrylate ester corresponding to Formula (I): 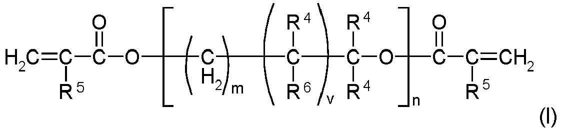 wherein: R⁴ is hydrogen, C₁-C₄ alkyl or 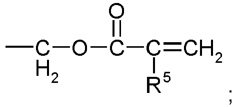
R⁵ is hydrogen, halogen or C₁-C₄ alkyl;
R⁶ is hydrogen, hydroxy or 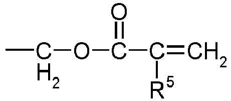
   m is an integer ≥1, preferably from 1 to 8;
   v is 0 or 1; and,
   n is an integer n is ≥3, preferably from 3 to 30.

Of such polyether (meth)acrylates of Formula I mention may in particular be made of poly(ethylene glycol) di(meth)acrylates possessing the structure below: 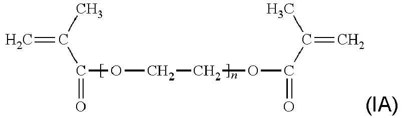 wherein: n is ≥3, preferably from 3 to 30, more preferably from 3 to 20.

As such, specific examples include but are not limited to: PEG 200 DMA (n≈ 4); PEG 400 DMA (n≈9); PEG 600 DMA (n≈ 14); and, PEG 800 DMA (n≈19), in which the assigned number (e.g., 400) represents the weight average molecular weight of the glycol portion of the molecule.

Another useful class of macromonomer having utility herein, either alone or in combination with other macromonomers, are the reaction product of (meth)acrylate functionalized hydroxyl- or amino-containing materials and polyisocyanate in suitable stoichiometric amounts so as to convert all of the isocyanate groups to urethane or ureido groups, respectively.

(Meth)acrylate esters suitable as reactants may possess the formula:

H₂C=C(R^{u})-C(O)-O-R^{v}-L-H

wherein:
R^{u} is H, halogen or C₁ alkyl;
R^{v} is C₁-C₈ alkylene, C₆-C₁₈ arylene, C₇-C₁₈ alkylarylene or C₇-C₁₈ aralkylene;
L is -O- or -N(R^{w})-; and,
R^{w} is H or C₁-C₆ alkyl.

Upon proper reaction with a polyisocyanate, a macromonomer is yielded having the general formula (U1):

[H₂C=C(R^{u})-C(O)-O-R^{v}-L-C(O)-NH-]ₙ-B

wherein:
n is an integer of from 2 to 6;
R^{u}, R^{v}, R^{w}, L have the meanings assigned above; and,
B is a polyvalent organic radical selected from alkyl, alkenyl, cycloalkyl, cycloalkenyl, aryl, alkaryl, alkaryl or heterocyclic radicals.

Exemplary macromonomers in accordance with Formula (U1) may possess a weight average molecular weight (Mw) of from 1000 to 10000 daltons, such as from 1000 to 5000 daltons.

### a2) Aliphatic and Cycloaliphatic (Meth)acrylate Monomers

Based on the weight of the curable film, the curable film adhesive of the present disclosure preferably comprises from 0 to 25 wt.%, more preferably from 5 to 20 wt.%, of a2) at least one (meth)acrylate monomer represented by Formula II:

H₂C=CGCO₂R¹ (II)

wherein:
G is hydrogen, halogen or C₁ alkyl; and,
R¹ is: C₁-C₃₀ alkyl; C₁-C₁₈ hydroxyalkyl; C₂-C₃₀ heteroalkyl; C₃-C₃₀ cycloalkyl; C₂-C₈ heterocycloalkyl; C₂-C₂₀ alkenyl; or, C₂-C₁₂ alkynyl.

For example, R¹ may be: C₁-C₁₈ alkyl, C₁-C₁₂ hydroxyalkyl; C₂-C₁₈ heteroalkyl, C₃-C₁₈ cycloalkyl; C₂-C₈ heterocycloalkyl; C₂-C₈ alkenyl; or, C₂-C₈ alkynyl. Desirably, said monomer(s) a2) are characterized in that R¹ is C₁-C₁₈ alkyl, C₁-C₆ hydroxyalkyl or C₃-C₁₈ cycloalkyl.

Examples of (meth)acrylate monomers a2) in accordance with Formula (II) include but are not limited to: methyl (meth)acrylate; ethyl (meth)acrylate; butyl (meth)acrylate; hexyl (meth)acrylate; 2-ethylhexyl (meth)acrylate; dodecyl (meth)acrylate; lauryl (meth)acrylate; cyclohexyl (meth)acrylate; isobornyl (meth)acrylate; 2-hydroxyethyl (meth)acrylate (HEMA); 2-hydroxypropyl (meth)acrylate; ethylene glycol monomethyl ether (meth)acrylate; ethylene glycol monoethyl ether (meth)acrylate; ethylene glycol monododecyl ether (meth)acrylate; diethylene glycol monomethyl ether (meth)acrylate; trifluoroethyl (meth)acrylate; and, perfluorooctyl (meth)acrylate.

### a3) Aromatic (Meth)acrylate Monomers

Based on the weight of the curable film, the curable film adhesive of the present disclosure preferably comprises from 0 to 25 wt.%, more preferably from 5 to 20 wt.%, of a3) at least one (meth)acrylate monomer represented by Formula II:

H₂C=CQCO₂R² (III)

wherein:
Q is hydrogen, halogen or C₁ alkyl; and,
R² is C₆-C₁₈ aryl, C₁-C₉ heteroaryl, C₇-C₁₈ alkylaryl, C₇-C₁₈ heteroalkylaryl or C₇-C₁₈ aralkyl.

Exemplary (meth)acrylate monomers a3) in accordance with Formula (III) - which may be used alone or in combination - include but are not limited to: benzyl (meth)acrylate; phenoxyethyl (meth)acrylate; phenoxydiethylene glycol (meth)acrylate; phenoxypropyl (meth)acrylate; and, phenoxydipropylene glycol (meth)acrylate.

### a4) Further Ethylenically Unsaturated Monomers

The curable film adhesive may comprise ethylenically unsaturated monomers not conforming to the definitions of a1), a2) and a3). However, the addition of such further monomers should be constrained by the condition that the total amount of ethylenically unsaturated monomers should not exceed 90 wt.%, based on the total weight of the curable film.

Operable further (meth)acrylate monomers include those that possess certain additional, non-polymerizing functionalities which can improve the surface adhesion of polymers derived therefrom. Mention in this regard may be made of anhydride, urethane, phosphate or phosphonate functionalities and (meth)acrylate monomers bearing such functionalities may be used in the present composition. A listing of such phosphorus compounds is found in US Patent No. 4,223,115. Exemplary monomers include: 2-monomethacryloxyethyl phosphate; bis(2-methacryloxyethyl) phosphate; 2-acryloyloxyethyl phosphate; bis-(2-acryloyloxyethyl) phosphate; methyl-(2-methacryloyloxyethyl) phosphate; ethyl methacryloyloxyethyl phosphate; methyl acryloyloxyethyl phosphate; ethyl acryloyloxyethyl phosphate; 2-hydroxyethylmethacrylate phosphate; 10-[(2-methylprop-2-enoyl)oxy]decyl dihydrogen phosphate (*10-methacryloyloxydecyl dihydrogen phosphate);* and, 4-methacryloxyethyl trimellitic anhydride. The use of 2-methacryloxyethyl phenyl urethane (MAPU) might also be mentioned.

The composition may, in certain circumstances, further comprise co-polymerizable acid. It is considered that the co-polymerizable acid might improve the cure speed and metal adhesion of the composition. For completeness, whilst such monomers should typically be used in the form of free acid, it is not precluded that the constituent acid groups of the monomers be partially or completely neutralized with suitable bases, provided this does not compromise their participation in copolymerization.

Without intention to limit the present disclosure, co-polymerizable acid monomers should be selected from the group consisting of: ethylenically unsaturated carboxylic acids; ethylenically unsaturated sulfonic acids; vinylphosphonic acid; and, mixtures thereof. Suitable ethylenically unsaturated sulfonic acids are, for instance, vinylsulfonic acid, styrenesulfonic acid and acrylamidomethylpropanesulfonic acid.

Preferably the co-polymerizable acid of this part comprises or consists of ethylenically unsaturated carboxylic acids selected from the group consisting of: α,β-monoethylenically unsaturated monocarboxylic acids; α,β-monoethylenically unsaturated dicarboxylic acids; C₁-C₆ alkyl half-esters of α,β-monoethylenically unsaturated dicarboxylic acids; α,β-monoethylenically unsaturated tricarboxylic acids; and, C₁-C₆ alkyl esters of α,β-monoethylenically unsaturated tricarboxylic acids bearing at least one free carboxylic acid group; and, mixtures thereof. In particular, the co-polymerizable acid of this part comprises or consists of at least one acid selected from the group consisting of: methacrylic acid; acrylic acid; itaconic acid; maleic acid; aconitic acid; crotonic acid; and, fumaric acid.

The reactive monomers of the present composition may, in certain embodiments, further comprise poly(meth)acylate species. In particular, the composition may comprise, either alone or in combination: poly(meth)acrylates of alkane polyols, such as ethylene glycol di(meth)acrylate, propylene glycol di(meth)acrylate, butylene glycol di(meth)acrylate, neopentyl glycol di(meth)acrylate, hexylene glycol di(meth)acrylate, trimethylolpropane tri(meth)acrylate, glycerin tri(meth)acrylate and pentaerythritol tetra(meth)acrylate; and, bisphenol-A di(meth)acrylates, such as ethoxylated bisphenol-A (meth)acrylate ("EBIPMA").

The present disclosure also does not preclude the presence of allylic monomers which can be copolymerized with (meth)acrylate monomers. Mention in this regard may be made of: prop-2-en-1-ol *(allyl alcohol);* 3-chloroprop-1-ene (*allyl chloride*); diallyl ortho-phthalate; diallyl terephthalate, diethylene glycol diallyl carbonate; triallyl cyanurate; triallyl trimesate; and, triallyl isocyanurate. However, when included, such allylic co-monomers should constitute less than 25 wt.%, based on the total weight of ethylenically unsaturated monomers.

The present disclosure also does not preclude the presence of vinyl monomers which can be copolymerized with (meth)acrylate monomers and which are selected from the group consisting of: styrene monomers, such as styrene, vinyltoluene, α-methylstyrene and chlorostyrene; fluorine containing vinyl monomers, such as perfluoroethylene, perfluoropropylene and fluorinated vinylidene; silicon containing vinyl monomers such as vinyltrimethoxysilane and vinyltriethoxysilane; maleimide monomers, such as maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide; nitrile group containing vinyl monomers, such as acrylonitrile and methacrylonitrile; amide group containing vinyl monomers, such as acrylamide and methacrylamide; vinyl esters such as vinyl acetate, vinyl propionate, vinyl pivalate, vinyl benzoate and vinyl cinnamate; alkenes such as ethylene and propylene; conjugated dienes such as butadiene and isoprene; and vinyl chloride and vinylidene chloride. However, when included, such vinyl co-monomers should constitute less than 10 wt.%, preferably less than 5 wt.%, based on the total weight of ethylenically unsaturated monomers.

### b) Initiator

The curable film adhesive of the present invention includes at least one radical generating initiator. The curable film adhesive should conventionally comprise from 0.1 to 10 wt.%, for example from 0.1 to 5 wt.% or from 0.5 to 4 wt.% of b) said at least one radical generating initiator, based on the total weight of the curable film.

While certain peroxides - such as dialkyl peroxides - have been disclosed as useful initiators in *inter alia* US Patent No. 3,419,512 (Lees) and US Patent No. 3,479,246 (Stapleton) and indeed may have utility herein, hydroperoxides represent a preferred class of initiator for the present invention. Further, whilst hydrogen peroxide itself may be used, the most desirable polymerization initiators are the organic hydroperoxides. For completeness, included within the definition of hydroperoxides are materials such as organic peroxides or organic peresters which decompose or hydrolyze to form organic hydroperoxides *in situ:* examples of such peroxides and peresters are cyclohexyl and hydroxycyclohexyl peroxide and t-butyl perbenzoate, respectively.

In a preferred embodiment of the invention, the initiator comprises or consists of at least one hydroperoxide compound represented by the formula:

R^{p}OOH

| | |
|---|---|
| wherein: | RP is a hydrocarbon group containing up to 18 carbon atoms, and |
| preferably wherein: | RP is a C₁-C₁₂ alkyl, C₆-C₁₈ aryl or C₆-C₁₈ aralkyl group. |

As exemplary initiators, which may be used alone or in combination, there may be mentioned: cumene hydroperoxide (CHP); para-menthane hydroperoxide; t-butyl hydroperoxide (TBH); t-butyl perbenzoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; 4-methyl-2,2-di-t- butylperoxypentane.

### c) Accelerator

The curable film adhesive of the present disclosure includes at least one cure accelerator. The curable film adhesive should conventionally comprise from 0.1 to 5 wt.%, for example from 0.1 to 3 wt.% or from 0.5 to 2 wt.% of said at least one cure accelerator, based on the total weight of the curable film.

Without intention to limit the present disclosure, accelerators which may find utility herein, either alone or in combination, include: metallocenes, in particular ferrocenes such as n-butyl ferrocene; saccharin; toluidines, such as N,N-dimethyl-p-toluidine, N,N-diethyl-p-toluidine; N,N-diethyl-p-toluidine (DE-p-T), N,N-dimethyl-o-toluidine (DM-o-T), N,N-dimethyl-m-toluidine (DM-m-T); indoline; 2-methylindoline; acetyl phenylhydrazine (APH); 3-carboxyacryloyl phenylhydrazine (CAPH); methyl-3-carboxyacryloyl phenylhydrazine (MCAPH); 3-carboxypropanoyl phenylhydrazine (CPPH); methylene-3-carboxypropanoyl phenylhydrazine (MCPPH); phenyl glycines and derivatives thereof, as disclosed in US Patent No. 6,897,277 (Klemarczyk); maleic acid; quinones, such as naphthaquinone and anthraquinone; quinolines such as hydroxy-1,2,3,4-tetrahydrobenzo[h]quinoline; thiocaprolactam; thioureas, in particular alkyl thioureas; and, sulfonimide and sulfonamides, as disclosed in US Patent No. 6,958,368 (Klemarczyk).

Further instructive references on suitable cure accelerators include: US Patent No. 3,218,305 (Krieble); US Patent No. 4,180,640 (Melody); US Patent No. 4,287,330 (Rich); US Patent No. 4,321,349 (Rich); US Patent No. 3,970,505 (Hauser); and, US Patent No. 6,835,762 (Klemarczyk).

### d) Polyvinyl Butyral Resin

The curable film adhesive of the present disclosure comprises d) at least one solid thermoplastic polyvinyl butyral resin, preferably in an amount of from 5 to 50 wt.%, based on the weight of the curable film. For example, the curable film adhesive may comprise from 5 to 30 wt.% or from 5 to 20 wt.% of d) said at least one solid thermoplastic polyvinyl butyral resin, based on the weight of the curable film. It is considered that the solid thermoplastic polyvinyl butyral resin may act as a film former.

The or each solid thermoplastic polyvinyl butyral resin of the curable film adhesive should possess a softening point in the range of from 50 to 300°C, for instance from 100 to 250°C or from 140 to 200°C. The use of a solid thermoplastic polyvinyl butyral resin having a high softening point - and in particular a softening point of at least 100°C or at least 140°C - is believed to impart the resulting compositions with good thermal resistance. This may render compositions of the disclosure which are provided in tape form suitable for applications at elevated temperatures, such as at 100°C, 150°C or even higher.

Independently of or additional to the softening point characterization, the or each solid thermoplastic polyvinyl butyral resin should have a weight average molecular weight (Mw) of from 40 to 250 kilodaltons (KDa), more particularly from 40 to 170 kDa or from 40 to 120 kDa.

Illustrative commercial solid thermoplastic polyvinyl butyral resins having utility herein include Butvar^{®} B-79, Butvar^{®} B-72, Butvar^{®} B-74, Butvar^{®} B-76, Butvar^{®} B-90, and Butvar^{®} B-98, all available from Eastman.

### e) Non-Polymerizable Electrolyte

The curable film adhesive comprises from 0.1 to 30 wt.%, based on the weight of the curable film, of non-polymerizable electrolyte: said non-polymerizable electrolyte may preferably constitute from 1 to 20 wt.%, for example from 5 to 15 wt.% of the curable film.

Important electrolytes include the non-polymerizable salts of: ammonium; pyridinium; pyrrolidinium; phosphonium; imidazolium; oxazolium; guanidinium; and, thiazolium. In exemplary embodiments, the electrolyte of the present disclosure comprises at least one salt having a Formula selected from the group consisting of: 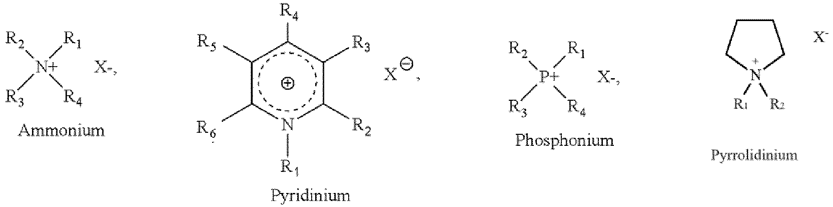 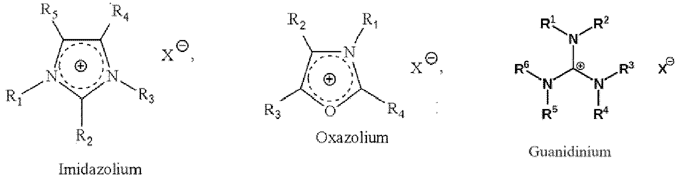 and 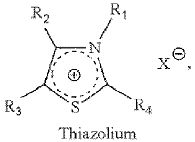 wherein:
R₁, R₂, R₃, R₄, R₅ and R₆ are independently selected from hydrogen, C₁-C₁₈ alkyl, C₃-C₁₈ cycloalkyl, C₆-C₁₈ aryl, C₇-C₂₄ aralkyl, C₂-C₂₀ alkenyl, -C(O)R^{q}, -C(O)OH, -CN or -NO₂;
R^{q} is C₁-C₆ alkyl; and,
X is a counter anion.

Where an ammonium salt is used, it may be subject to the proviso that at most three and desirably at most two of the groups R₁ to R₄ may be hydrogen.

As regards said moieties R₁ to R₆, the terms C₁-C₁₈ alkyl, C₃-C₁₈ cycloalkyl, C₆-C₁₈ aryl, C₇-C₂₄ aralkyl, C₂-C₂₀ alkenyl expressly include groups wherein one or more hydrogen atoms are substituted by halogen atoms (e.g. C₁-C₁₈ haloalkyl) or hydroxyl groups (e.g. C₁-C₁₈ hydroxyalkyl). In particular, it is preferred that R₁, R₂, R₃, R₄, R₅ and R₆ are independently selected from hydrogen, C₁-C₁₂ alkyl, C₁-C₁₂ haloalkyl, C₁-C₁₂ hydroxyalkyl or C₃-C₁₂ cycloalkyl. For example, R₁, R₂, R₃, R₄, R₅ and R₆ may be independently selected from hydrogen, C₁-C₆ alkyl, C₁-C₆ haloalkyl or C₁-C₆ hydroxyalkyl.

There is no particular intention to limit the counter anion (X-) which may be employed in the non-polymerizable electrolyte. Exemplary anions may be selected from:
- Halides;
- Pseudohalides and halogen-containing compounds of the formulae PF₆ ⁻, CF₃SO₃ ⁻, (CF₃SO₃)₂N⁻, CF₃CO₂ ⁻ and CCl₃CO₂ ⁻,
- CN⁻, SCN⁻ and OCN⁻;
- Phenates;
- Sulfates, sulfites and sulfonates of the general formulae SO₄ ²⁻, HSO₄ ⁻, SO₃ ²⁻, HSO₃ ⁻, R^{a}OSO₃ ⁻ and R^{a}SO₃ ⁻;
- Phosphates of the general formulae PU₄ ³⁻, HPO₄ ²⁻, H₂PO₄ ⁻, R^{a}PO₄ ²⁻, HR^{a}PO₄ ⁻ and R^{a}R^{b}PO₄ ⁻;
- Phosphonates and phosphinates of the general formulae R^{a}HPO₃ ⁻,R^{a}R^{b}PO₂ ⁻ and R^{a}R^{b}PO₃ ⁻;
- Phosphites of the general formulae: PO₃ ³⁻, HPOs ²⁻, H₂PO₃ ⁻, R^{a}PO₃ ²⁻, R^{a}HPO₃ - and R^{a}R^{b}PO₃ ⁻;
- Phosphonites and phosphinites of the general formulae R^{a}R^{b}PO₂ ⁻, R^{a}HPO₂ ⁻, R^{a}R^{b}PO⁻and R^{a}HPO⁻;
- Carboxylic acid anions of the general formula R^{a}COO⁻;
- Hydroxycarboxylic acids anions and sugar acid anions;
- Saccharinates (salts of o-benzoic acid sulfimide);
- Borates of the general formulae BO₃ ³⁻, HBOs ²⁻, H₂BO₃ ⁻, R^{a}R^{b}BO₃ ⁻, R^{a}HBO₃ ⁻, R^{a}BO₃ ²⁻, B(OR^{a})(OR^{b})(OR^{c})(OR^{d})⁻, B(HSO₄)⁻ and B(R^{a}SO₄)⁻;
- Boronates of the general formulae R^{a}BO₂ ²⁻ and R^{a}R^{b}BO⁻;
- Carbonates and carbonic acid esters of the general formulae HCO₃ ⁻, CO₃ ²⁻ and R^{a}CO₃ ⁻;
- Silicates and silicic acid esters of the general formulae SiO₄ ⁴⁻, HSiO₄ ³⁻, H₂SiO₄ ²⁻, H₃SiO₄ ⁻, R^{a}SiO₄ ³⁻, R^{a}R^{b}SiO₄ ²⁻, R^{a}R^{b}R^{c}SiO₄ ⁻, HR^{a}SiO₄ ²⁻, H₂R^{a}SiO₄ - and HR^{a}R^{b}SiO₄ ⁻;
- Alkyl- and arylsilanolates of the general formulae R^{a}SiO₃ ³⁻, R^{a}R^{b}SiO₂ ²⁻, R^{a}R^{b}R^{c}SiO⁻, R^{a}R^{b}R^{c}SiO₃ ⁻, R^{a}R^{b}R^{c}SiO₂ - and R^{a}R^{b}SiO₃ ²⁻;
- Pyridinates and pyrimidinates;
- Carboxylic acid imides, bis(sulfonyl)imides and sulfonylimides of the general formulae: 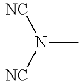 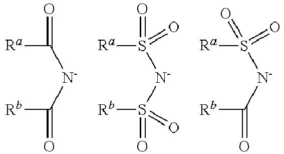
- Methides of the general formula: 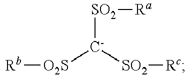
- Alkoxides and aryloxides of the general formula R^{a}O⁻; or,
- Sulfides, hydrogen sulfides, polysulfides, hydrogen polysulfides and thiolates of the general formulae S²⁻, HS⁻, [Sᵥ]²⁻, [HSᵥ]⁻ and [R^{a}S]⁻
in which general formulae
v is a whole positive number of from 2 to 10.
R^{a}, R^{b}, R^{c} and R^{d} are independently selected from hydrogen, halogen, C₁-C₁₂ alkyl, C₅-C₁₂ cycloalkyl, C₅-C₁₂ heterocycloalkyl, C₆-C₁₈ aryl or C₅-C₁₈ heteroaryl.

Based on the definitions in the above list, preferred anions are selected from the group consisting of: halides; pseudohalides and halogen-containing compounds as defined above; carboxylic acid anions, in particular formate, acetate, propionate, butyrate and octanoate; hydroxycarboxylic acid anions, such as lactate; pyridinates and pyrimidinates; carboxylic acid imides, bis(sulfonyl)imides and sulfonylimides; sulfates, in particular methyl sulfate and ethyl sulfate; sulfites; sulfonates, in particular methanesulfonate; and, phosphates, in particular dimethyl-phosphate, diethyl-phosphate and di-(2-ethylhexyl)-phosphate.

The electrolyte is preferably selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl-pyrrolidinium 2-(2-fluoroanilino)-pyridinate, 1-butyl-1-methyl-pyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, tributylmethylammonium bis(fluorosulfonyl)imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, N-propyl-N-methylpyrrolidinium bis(fluorosulfonyl) imide, 1-butyl-1-methylpyrrolidinium bis(trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium methyl sulfate, 1-butyl-3-methylimidazolium methanesulfonate, 1-butyl-3-methylimidazolium trifluoromethanesulfonate, 1-butyl-3-methylimidazolium hexafluorophosphate, 1-ethyl-3-methylimidazolium bis(trifluoromethylsulfonyl)imide, 1-butyl-3-methylimidazolium bis(trifluoromethylsulfonyl)imide, 1-ethyl-3-methylimidazolium trifluoromethanesulfonate, 1-butyl-3-methylimidazolium bis(fluorosulfonyl)imide, 1-ethyl-3-methylimidazolium bis(fluorosulfonyl)imide, 1-butyl-3-methyl-imidazolium-fluorosulfonate, 1-dodecyl-3-methylimidazolium bis(fluorosulfonyl)imide, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tributylmethylphosphonium bis(fluorosulfonyl)imide, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate, tributylmethylphosphonium methyl sulfate and mixtures thereof.

A particular preference may be mentioned for the use of at least one of trihexyl(tetradecyl)phosphonium bis(trifluoromethylsulfonyl)imide, tributylmethylphosphonium bis(fluorosulfonyl) imide, tributylmethyl- phosphonium methyl sulfate, tributylmethylammonium bis(fluorosulfonyl)imide, N-propyl-N-methylpyrrolidinium bis(fluorosulfonyl) imide, 1-ethyl-3-methyl-1H-imidazol-3-um methyl sulfate, 1-ethyl-3-methyl-1H-imidazol-3-um methanesulfonate, 1-ethyl-3-methylimidazolium trifluoromethanesulfonate, 1-ethyl-3-methylimidazolium bis(trifluoromethylsulfonyl)imide, 1-butyl-3-methylimidazolium methyl sulfate, 1-butyl-3-methylimidazolium methanesulfonate, 1-butyl-3-methyl-imidazolium-fluorosulfonate, 1-butyl-3-methylimidazolium trifluoromethanesulfonate, 1-butyl-3-methylimidazolium bis(trifluoromethylsulfonyl)imide, 1-butyl-3-methylimidazolium bis(fluorosulfonyl)imide and 1-dodecyl-3-methylimidazolium bis(fluorosulfonyl)imide.

### f) Solubilizer

The curable film adhesive of the present disclosure may optionally comprise a solubilizer. The curable film adhesive may, for instance, contain from 0 to 10 wt.%, from 0 to 5 wt.% or from 0 to 2 wt.% of solubilizer, based on the weight of the curable film. The solubilizer has the function of promoting the miscibility of the electrolyte e) within the adhesive composition: the solubilizer may or may not form part of the polymer matrix formed upon curing of the adhesive composition but does serve to facilitate ion transfer therein. The solubilizer is, as such, preferably a polar compound and should desirably be liquid at room temperature.

Suitable classes of solubilizer include: polyphosphazenes; polymethylenesulfides; polyoxyalkylene glycols; polyethylene imines; silicone surfactants, such as polyalkylsiloxane and polyoxyalkylene modified polydimethylsiloxanes including but not limited to poly(C₂-C₃)oxyalkylene modified polydimethylsiloxanes; co-polymers of functionalized polyalkysiloxanes and epoxy resins, such as copolymers of polydimethylsiloxane (PDMS) and epoxy resin; polyhydric alcohols; and, sugars. For completeness, fluorinated silicone surfactants, such as fluorinated polysilanes, are intended to be encompassed within the term silicone surfactants.

Exemplary polyhydric alcohols and sugars include ethylene glycol, 1,3-propanediol, cyclohexandiol, hydroquinone, catechol, resorcinol, phloroglucinol, pyrogallol, hydroxyhydroquinone, tris(hydroxymethyl)benzene, tris(hydroxymethyl)benzene with three methyl or ethyl substituents bonded to the remaining benzene carbon atoms, isosorbide, isomannide, isoidide, glycerol, cyclohexane-1,2,4-triol, 1,3,5-cyclohexanetriol, pentane-1,2,3-triol, hexane-1,3,5-triol, erythritol, 1,2,4,5-tetrahydroxybenzene, threitol, arabitol, xylitol, ribitol, mannitol, sorbitol, inositol, fructose, glucose, mannose, lactose, 1,1,1-tris(hydroxymethyl)propane, 1,1,1-tris(hydroxymethyl)ethane, di(trimethylolpropane), trimethylolpropane ethoxylate, 2-hydroxymethyl-1,3-propanediol, pentaerythritol allyl ether and pentaerythritol.

Of the polyoxyalkylene glycols, a particular preference for the use of polyoxy(C₂-C₃)alkylene glycols having an average molecular weight (Mw) of from 200 to 10000 g/mol, for example 200 to 2000 g/mol, may be noted. For completeness, the term polyoxy(C₂-C₃)alkylene refers to polyether radicals derived from ethyleneoxide, propyleneoxide or both ethyleneoxide and propyleneoxide.

### g) Additives and Adjunct Ingredients

The curable film adhesive will typically further comprise adjuvants and additives that can impart improved properties to the films. Included among such adjuvants and additives are: plasticizers; stabilizers including UV stabilizers, free radical stabilizers, anionic stabilizers and combinations thereof; sequestrants; antioxidants; coupling agents; adhesion promoters; lubricants; defoaming agents; rheological adjuvants such as fillers; toughening agents; drying agents; fungicides; flame retardants; corrosion inhibitors; and, colorants such as pigments and dyes.

Such adjuvants and additives can be used in such combination and proportions as desired, provided they do not adversely affect the nature and essential properties of the composition. While exceptions may exist in some cases, these adjuvants and additives should not *in toto* comprise more than 50 wt.% of the total curable film adhesive and preferably should not comprise more than 20 wt.% of the curable film adhesive.

It is noted, in aside, that metal catalysts are generally undesirable additives in one-part anaerobic formulations and indeed the present formulations may comprise sequestering agents to precipitate contaminating metals. As such it is preferred that the curable film adhesives of the present disclosure comprise sequestrants in an amount of from 0.001 to 2.0 wt.%, based on the weight of the curable film. Ethylene diamine tetraacetic acid or salts thereof and 1-hydroxyethane 1,1-diphosphonic acid (etidronic acid) or salts thereof may be mentioned as exemplary sequestrants.

A *"plasticizer"* for the purposes of this disclosure is a substance that decreases the viscosity of the composition and thus facilitates its processability. Herein the plasticizer may constitute up to 10 wt.% or up to 5 wt.%, based on the total weight of the curable film, and is preferably selected from the group consisting of: polydimethylsiloxanes (PDMS); diurethanes; ethers of monofunctional, linear or branched C₄-C₁₆ alcohols, such as Cetiol OE (obtainable from Cognis Deutschland GmbH, Düsseldorf); esters of abietic acid, butyric acid, thiobutyric acid, acetic acid, propionic acid esters and citric acid; esters based on nitrocellulose and polyvinyl acetate; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; epoxidized plasticizers; polyether plasticizers, such as end-capped polyethylene or polypropylene glycols; polystyrene; hydrocarbon plasticizers; chlorinated paraffin; and, mixtures thereof. It is noted that, in principle, phthalic acid esters can be used as the plasticizer but these are not preferred due to their toxicological potential. It is preferred that the plasticizer comprises or consists of one or more polydimethylsiloxane (PDMS).

Stabilizers may, in particular, be employed to control, inhibit or prevent premature activation of the free radical initiator: they may, for instance, inhibit or prevent (hydro)peroxide decomposition. Exemplary stabilizers include hydroquinones, benzoquinones, naphthoquinones, phenanthroquinones, anthraquinones and substituted compounds thereof. Various phenols may also be used as stabilizers, such as 2,6-di-t-butyl-4-methyl phenol. Conventionally stabilizers are used in an amount of from 0.01 to 1.0 wt.%, based on the total weight of the curable film.

As suitable adhesion promoters there may be mentioned: (meth)acrylic acid; Ebecryl 168, methacrylated acidic adhesion promoter commercially available from Radcure Corporation; Esstech PL-2152, methacrylate based adhesion promoter, available from Esstech; Ebecryl 170, acrylated acidic adhesion promoter commercially available from Radcure Corporation; β-carboxyacrylate; Sartomer CN 704, acrylated polyester adhesion promoter available from Sartomer Corporation; and, CD9050, monofunctional acid ester CD 9052, available from Sartomer Corporation; CD 9052, trifunctional acid ester commercially available from Sartomer Corporation; 2-(methacryloyloxy)ethyl succinate (HEMA succinate); and, zinc diacrylate.

Those curable films may optionally contain a toughening rubber. Exemplary toughening rubbers which may be used alone or in combination include: core-shell rubber particles; rubber-modified epoxy resins; chlorosulfonated polyethylene; chlorinated polyethylene; polychloroprene; polyisoprene rubber; polybutadiene rubber; nitrile rubber; SBR rubber (random copolymer of butadiene and styrene); and, block copolymer rubbers, in particular acrylic block copolymers and block copolymers of conjugated dienes with vinyl aromatic monomers, (meth)acrylonitrile or (meth)acrylates. At least a portion of the toughening rubber should have a glass transition temperature (T_{g}) of no greater than 25°C: preferably at least a portion of the toughening rubber should have a glass transition temperature (T_{g}) of 0°C or lower, for example -20°C or lower, preferably - 40°C or lower and even more preferably -60°C or lower.

The term *"core shell rubber"* or CSR is being employed in accordance with its standard meaning in the art as denoting a rubber particle core formed by a polymer comprising an elastomeric or rubbery polymer as a main ingredient and a shell layer formed by a polymer which is graft polymerized onto the core. The shell layer partially or entirely covers the surface of the rubber particle core in the graft polymerization process. By weight, the core should constitute at least 50 wt.% of the core-shell rubber particle.

The polymeric material of the core should have a glass transition temperature (T_{g}) of no greater than 0°C and preferably a glass transition temperature (T_{g}) of -20°C or lower, more preferably -40°C or lower and even more preferably -60°C or lower. The polymer of the shell is non-elastomeric, thermoplastic or thermoset polymer having a glass transition temperature (T_{g}) of greater than room temperature, preferably greater than 30°C and more preferably greater than 50°C.

Without intention to limit the disclosure, the core may be comprised of: a diene homopolymer, for example, a homopolymer of butadiene or isoprene; a diene copolymer, for example a copolymer of butadiene or isoprene with one or more ethylenically unsaturated monomers, such as vinyl aromatic monomers, (meth)acrylonitrile or (meth)acrylates; polymers based on (meth)acrylic acid ester monomers, such as polybutylacrylate; and, polysiloxane elastomers such as polydimethylsiloxane and crosslinked polydimethylsiloxane.

Similarly without intention to limit the present disclosure, the shell may be comprised of a polymer or copolymer of one or more monomers selected from: (meth)acrylates, such as methyl methacrylate; vinyl aromatic monomers, such as styrene; vinyl cyanides, such as acrylonitrile; unsaturated acids and anhydrides, such as acrylic acid; and, (meth)acrylamides. The polymer or copolymer used in the shell may possess acid groups that are cross-linked ionically through metal carboxylate formation, in particular through forming salts of divalent metal cations. The shell polymer or copolymer may also be covalently cross-linked by monomers having two or more double bonds per molecule.

Exemplary commercial tougheners having utility in the present disclosure include: Blendex 338, available from Galata Chemicals; Kurarity LA2250 available from Kuraray; Nipol 1472X available from Zeon Chemicals; Paraloid TMS 2670J, Paraloid EXL 250A, EXL 2655 and EXL2691 A, available from The Dow Chemical Company; the Kane Ace^{®} MX series available from Kaneka Corporation, and in particular MX 120, MX 125, MX 130, MX 136, MX154, MX 551, MX553 and MX714; and, METABLEN SX-006 available from Mitsubishi Rayon.

As noted above, the curable films of the present disclosure may contain filler. The total amount of fillers present in the curable film will preferably be from 1 to 15 wt.%, and more preferably from 1 to 10 wt.%, based on the total weight of the curable film. The desired viscosity of the solvent-borne composition from which the curable film is cast will typically be one determinant of the total amount of filler added, noting that the solvent-borne compositions should typically possess a viscosity of from 3000 to 20000, preferably from 5,000 to 15000 mPas. Said filler may be used independently of, or in combination with, the aforementioned toughener. The use of conductive and / or non-conductive fillers is envisaged but, in an embodiment, the filler included in the curable film consists of or consists essentially of non-conductive particulate fillers.

As noted, the curable film adhesive may, in certain circumstances, comprise electrically conductive particulate filler. The curable film adhesive may, for instance, contain from 0 to 10 wt.% or from 0.5 to 5 wt.% of electrically conductive particles, based on the weight of the curable film.

Broadly, there is no particular intention to limit the shape of the particles employed as conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as conductive fillers. However, such conductive fillers will conventionally have an average volume particle size, as measured by laser diffraction / scattering methods, of from 0.1 to 1500 µm, for example from 1 to 1250 µm.

Exemplary conductive particulate fillers include, but are not limited to: silver; copper; gold; palladium; platinum; nickel; gold or silver-coated nickel; carbon black; carbon fiber; graphite; aluminum; indium tin oxide; silver coated copper; silver coated aluminum; metallic coated glass spheres; metallic coated filler; metallic coated polymers; silver coated fiber; silver coated spheres; antimony doped tin oxide; conductive nanospheres; nano silver; nano aluminum; nano copper; nano nickel; carbon nanotubes; and, mixtures thereof. The use of particulate silver and / or carbon black as the conductive filler is preferred.

The curable film adhesive may further comprise electrically non-conductive particulate filler. The curable film adhesive may, for instance, contain from 0 to 10 wt.% or from 0.5 to 10 wt.% of electrically non-conductive particles, based on the weight of the curable film.

Broadly, there is no particular intention to limit the shape of the particles employed as non-conductive fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as non-conductive fillers. However, such non-conductive fillers will conventionally have an average volume particle size, as measured by laser diffraction / scattering methods, of from 0.1 to 1500 µm, for example from 1 to 1250 µm.

Exemplary non-conductive fillers include but are not limited to calcium carbonate, calcium oxide, calcium hydroxide (lime powder), fumed silica, amorphous silica, precipitated and/or pyrogenic silica, zeolites, bentonites, wollastonite, magnesium carbonate, diatomite, barium sulfate, alumina, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, and other chopped fibers. Short fibers such as glass fibers, glass filament, polyacrylonitrile, carbon fibers, Kevlar fibers, or polyethylene fibers can also be added.

The pyrogenic and/or precipitated silica advantageously have a BET surface area from 10 to 90 m²/g. When they are used, they do not cause any additional increase in the viscosity of the solvent-borne composition from which the curable film adhesive is cast but do contribute to strengthening the cured film.

It is likewise conceivable to use pyrogenic and/or precipitated silica having a higher BET surface area, advantageously from 100 to 250 m²/g as a filler: because of the greater BET surface area, the effect of strengthening the cured film is achieved with a smaller proportion by weight of silica.

Also suitable as non-conductive fillers are hollow spheres having a mineral shell or a plastic shell. These can be, for example, hollow glass spheres that are obtainable commercially under the trade names Glass Bubbles@. Plastic-based hollow spheres, such as Expancel^{®} or Dualite^{®}, may be used and are described in EP 0 520 426 B1: they are made up of inorganic or organic substances and each have a diameter of 1 mm or less, preferably 500 µm or less.

Non-conductive fillers which impart thixotropy to the solvent-borne compositions from which the curable film adhesive are cast may be preferred for many applications: such fillers are also described as rheological adjuvants, e.g. hydrogenated castor oil, fatty acid amides, or swellable plastics such as PVC.

### FORMATION OF THE ARTICLE OF MANUFACTURE

The curable films of the present disclosure are cast from a solvent-borne composition comprising the above-defined ingredients and at least one solvent. The amount of solvent which is present is determined by the desired viscosity of that solvent-borne composition and may be variant depending on the casting method being employed. However, for most casting methods, the solvent-borne compositions should typically possess a viscosity of from 3000 to 20000, preferably from 5,000 to 15000 mPas, as determined at 25°C.

The or each solvent should desirably be aprotic and have a boiling point of less than 100°C and preferably less than 80°C. Exemplary solvents, which may be used alone or in combination, include: aliphatic and cycloaliphatic hydrocarbons, such as pentane, cyclopentane, n-hexane, cyclohexane and n-heptane; chlorinated aliphatic hydrocarbons, such as dichloromethane and chloroform; ethyl acetate; ketones such as acetone and butan-2-one *(methyl ethyl ketone);* and, ethers such as diethyl ether, methyl-t-butyl ether, 1 ,4-dioxane and tetrahydrofuran. In particular, it is preferred that said at least one solvent is selected from the group consisting of tetrahydrofuran, dicloromethane, chloroform, ethyl acetate and mixtures thereof.

To form the solvent-borne compositions, the solvent and the aforementioned ingredients (*a)* - *g)*) are brought together and mixed. It is important that the mixing homogenously distributes the electrolyte within the solvent-borne composition: such thorough and effective mixing can be determinative of a homogeneous distribution of the charged species within the polymer matrix obtained following curing and thereby of the provision of sufficient ionic conductivity to support an electrochemical reaction at the interface with the electrically conductive substrate.

As is known in the art, to form one component (1K) curable solvent-borne compositions, the elements of the composition are brought together and homogeneously mixed under conditions which inhibit or prevent the reactive components from reacting: such conditions would be readily comprehended by the skilled artisan. As such, it will often be preferred that the curative elements are not mixed by hand but are instead mixed by machine - a static or dynamic mixer, for example - in pre-determined amounts under anhydrous conditions without intentional photo-irradiation and without external heating.

In an embodiment, the solvent-borne composition is formed by a multi-stage mixing process comprising: a first stage in which the above described polyvinyl butyral resin(s) is mixed with solvent to form a first stage mixture; and, ii) a second stage in which the first stage mixture is mixed with the remaining ingredients of the composition.

The solvent-borne compositions are then applied to the surfaces of the release liner or carrier by conventional application methods such as: brushing; roll coating; doctor-blade application; printing methods; and, spraying methods, including but not limited to air-atomized spray, air-assisted spray, airless spray and high-volume low-pressure spray.

It is recommended that the compositions be applied to a surface at a wet film thickness of from 10 to 1000 µm. The application of thinner layers within this range is more economical and provides for a reduced likelihood of deleterious thick cured regions. However, great control must be exercised in applying thinner coatings or layers so as to avoid the formation of discontinuous films.

After application, the solvent is permitted to evaporate. Whilst this may be effected at room temperature, the drying may be accelerated by elevating the temperature of the coated substrate. Where applicable, the temperature of the substrate may be raised above the mixing temperature and / or the application temperature of the solvent-borne composition using conventional means, including microwave induction, infrared irradiation, heating plates or by conveying the substrate to an oven. In that circumstance where the curable composition comprises a thermal initiator, care must be taken in the drying step not to elevate the temperature of the composition to the activation temperature of initiator.

Manufacturing process parameters - including *inter alia* the particular composition used, the applied thickness thereof and the operating conditions of the manufacturing equipment - can, of course, affect the degree of orientation and, as a result, the anisotropic, tack and peel force properties of the curable film.

### BONDED STRUCTURE

The present disclosure also provides for bonded structure comprising a first substrate (S¹) having an electrically conductive surface and a second substrate (S²) having an electrically conductive surface, wherein the cured electrochemically debondable adhesive film as defined hereinabove and in the appended claims is disposed between the conductive surfaces of said first and second substrates.

The bonded structure may be obtained by a transfer method using the article of manufacture (A). Thus, in important embodiments, the bonded structure is obtained by a method comprising: (i) providing an article (A) comprising a curable film as defined above, wherein the film is disposed on a release liner and / or a carrier; (ii) attaching the curable film of the article (A) to at least one of the conductive surfaces of the substrates (S¹, S²); (iii) mating the substrates (S¹, S²); and, (iv) curing the film between the substrates to be bonded together, wherein the release liner of the article (A), if present, is removed before and/or after step (ii). The mating of the substrates, to interpose the curable adhesive film therebetween, may occur under the application of pressure.

Prior to attaching the curable film, it is often advisable to pre-treat the relevant surfaces to remove foreign matter there from: this step can, if applicable, facilitate the subsequent adhesion of the films thereto. Such treatments are known in the art and can be performed in a single or multi-stage manner constituted by, for instance, the use of one or more of: an etching treatment with an acid suitable for the substrate and optionally an oxidizing agent; sonication; plasma treatment, including chemical plasma treatment, corona treatment, atmospheric plasma treatment and flame plasma treatment; immersion in a waterborne alkaline degreasing bath; treatment with a waterborne cleaning emulsion; treatment with a cleaning solvent, such as acetone, carbon tetrachloride or trichloroethylene; and, water rinsing, preferably with deionized or demineralized water. In those instances where a waterborne alkaline degreasing bath is used, any of the degreasing agent remaining on the surface should desirably be removed by rinsing the substrate surface with deionized or demineralized water.

In some embodiments, the adhesion of the transfer films to the preferably pre-treated substrate may be facilitated by the application of a primer thereto. Indeed primer compositions may be necessary to ensure efficacious fixture and / or cure times of the curable film adhesive on inactive substrates. Whilst the skilled artisan will be able to select an appropriate primer, instructive references for the choice of primer include but are not limited to: US Patent No. 3,855,040; US Patent No. 4,731,146; US Patent No. 4,990,281; US Patent No. 5,811,473; GB 2502554; and, US Patent No. 6,852,193.

The activation temperature of the free radical generating initiator depends on the specific compounds, including accelerators, present in the curable film. That said, the temperature required to ensure a desired curing rate can be determined in the individual case by the skilled artisan, using simple preliminary tests if necessary. Without intention to limit the present invention, the complete curing of the applied curable compositions should typically occur at temperatures in the range of from 15°C to 150°C, preferably from 20°C to 100°C, and in particular from 20°C to 80°C.

In certain circumstances, the heating of the curable films should be conducted under an inert gas atmosphere: suitable inert gases which may be mentioned include nitrogen, helium and argon. Precaution should be used when common nitrogen gases are used as a blanket, because such nitrogen may not be dry enough on account of its susceptibility to moisture entrainment; the nitrogen may require an additional drying step before use herein.

The bonded structure of the present disclosure will be described with reference to the appended drawings in which:

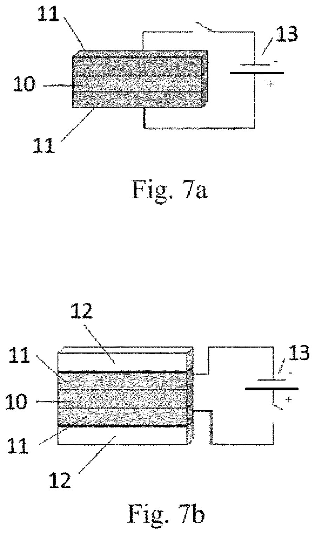

Fig. 7a depicts a bonded structure in accordance with a first embodiment of the present invention.
Fig. 7b depicts a bonded structure in accordance with a second embodiment of the present invention.

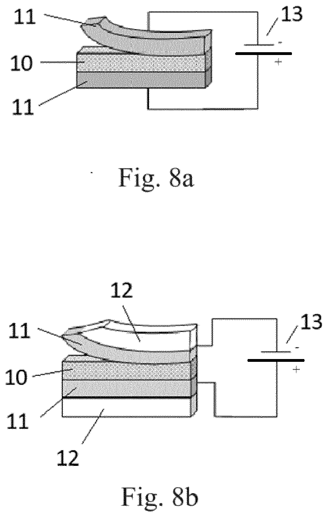

Fig. 8a depicts the initial debonding of the structure of the first embodiment upon passage of a current across that structure.
Fig. 8b depicts the initial debonding of the structure of the second embodiment upon passage of a current across that structure.

As shown in Figure 7a appended hereto, a bonded structure is provided in which a layer of cured adhesive film (10) is disposed between two conductive substrates (11). A layer of non-conductive material (12) may be disposed on the conductive substrates (11) to form the more complex bonded structure as depicted in Fig. 7b. Each layer of conductive substrate (11) is in electrical contact with an electrical power source (13) which may be a battery or an AC-driven source of direct current (DC). The positive and negative terminals of that power source (13) are shown in one fixed position but the skilled artisan will of course recognize that the polarity of the system can be reversed.

The two conductive substrates (11) are shown in the form of a layer which may be constituted by *inter alia:* a metallic film; a metallic mesh or grid; deposited metal particles; a resinous material which is rendered conductive by virtue of conductive elements disposed therein; or, a conducting oxide layer. As exemplary conductive elements there may be mentioned silver filaments, single-walled carbon nanotubes and multi-walled carbon nanotubes. As exemplary conducting oxides there may be mentioned: doped indium oxides, such as indium tin oxide (ITO); doped zinc oxide; antimony tin oxide; cadmium stannate; and, zinc stannate. The selection of the conductive material aside, the skilled artisan will recognize that the efficacy of the debonding operation may be diminished where the conductive substrates (11) are in the form of a grid or mesh which offers limited contact with the layer of cured adhesive film (10).

When an electrical voltage is applied between each conductive substrate (11), current is supplied to the cured adhesive film (10) disposed there between. This induces electrochemical reactions at the interface of the substrates (11) and the adhesive composition, which electrochemical reactions are understood as oxidative at the positively charged or anodic interface and reductive at the negatively charged or cathodic interface. The reactions are considered to weaken the adhesive bond between the substrates allowing the easy removal of the debondable composition from the substrate.

As depicted in Figures 8a and 8b, the debonding occurs at the negative interface, that interface between the cured adhesive film (10) and the electrically conductive surface (11) that is in electrical contact with the negative electrode. By reversing current direction prior to separation of the substrates, the adhesive bond may be weakened at both substrate interfaces.

It is however noted that the composition of the cured adhesive film (10) may be moderated so that debonding occurs at either the positive or negative interface or simultaneously from both. For some embodiments, a voltage applied across both surfaces so as to form an anodic interface and a cathodic interface will cause debonding to occur simultaneously at both the anodic and cathodic adhesive / substrate interfaces. In an alternative embodiment, reversed polarity may be used to simultaneously disbond both substrate / adhesive interfaces if the cured film does not respond at both interfaces to direct current. The current can be applied with any suitable waveform, provided that sufficient total time at each polarity is allowed for debonding to occur. Sinusoidal, rectangular and triangular waveforms might be appropriate in this regard and may be applied from a controlled voltage or a controlled current source.

Without intention to limit the present invention, it is considered that the debonding operation may be performed effectively where at least one and preferably both of the following conditions are instigated: a) an applied voltage of from 0.5 to 200 V, for example from 10 to 100 V; and, b) the voltage being applied for a duration of from 1 second to 120 minutes, for example from 1 second to 60 minutes. Where the release of the conductive substrate from the cured adhesive is to be facilitated by the application of a force - exerted via a weight or a spring, for instance - the potential might only need to be applied for the order of seconds.

The following examples are illustrative of the present invention and are not intended to limit the scope of the invention in any way.

### EXAMPLES

The following annotations are applied to compounds and materials employed in the Examples:

| | |
|---|---|
| BMIM-TFSI: | 1-Butyl-3-methylimidazolium bis(trifluoromethylsulfonyl)imide, available from Solvionic. |
| BMIM-OT: | 1-butyl-3-methylimidazolium trifluoromethanesulfonate, available from Solvionic. |
| EMIM-TFSI: | 1-ethyl-3-methylimidazolium bis(trifluoromethylsulfonyl)imide, available from Solvionic. |
| SR210HH: | Polyethylene glycol (200) dimethacrylate, available from Sartomer. |
| Esstech PL-2152: | Methacrylate based adhesion promoter, available from Esstech. |
| UM1: | Urethane acrylate oligomer having a weight average molecular weight (Mw) of 700 Daltons (75 *wt.% solution in triethyleneglycol dimethacrylate).* |
| FILCO663 P: | Hydroxypropoxy.)phenyl]propane fumaric acid polymer, available from Coim Group. |
| DYNACOLL^{®} 7150: | Amorphous, saturated copolyester available from Evonik Industries. |
| Butvar^{®} B-79: | Solid thermoplastic polyvinyl butyral resin (*Mw: 50-80 kDa; Softening Point: 140-200°C*), available from Eastman. |
| Stabilizer 1: | Mixture of 75 wt.% propylene glycol, 23 wt.% water and 3.5 wt.% tetrasodium EDTA. |
| Stabilizer 2: | Solution (5 wt.%) in polyethylethylene glycol dimethacrylate of quinone-based free radical stabilizer. |
| P84 NT: | Polyimide nanopowder, available from Evonik Industries. |

All remaining ingredients noted in Tables 1 and 2 may be sourced from Sigma Aldrich.

### Preparation Example 1: Solvent-Borne Curable Compositions

Five solvent-borne compositions (S1-S5) were prepared in accordance with the ingredients listed in Table 1 below. In forming each of these compositions, the solid thermoplastic polyvinyl butyral resin was dissolved in ethyl acetate at room temperature, before transferring the solution to a Speedmixer DAC150.147. The remaining components were then added and mixing was continued until each of the components had dissolved. For compositions comprising insoluble ingredients, mixing was continued until the ingredients had formed a dispersion in the solution.

**Table 1**

| Ingredient | S1 (wt.%)¹ | S2 (wt.%)¹ | S3 (wt.%)¹ | S4 (wt.%)¹ | S5 (wt.%)¹ |
|---|---|---|---|---|---|
| BMIM-TFSI | 5.0 | | | | |
| BMIM-OT | | 5.0 | | 5.00 | 5.00 |
| EMIM-TFSI | | | 5.0 | | |
| Ethyl Acetate | 38.00 | 38.00 | 38.00 | 39.91 | 38.00 |
| Butvar B-79 | 11.40 | 11.40 | 11.40 | 11.97 | 11.40 |
| SR210HH | 9.45 | 9.45 | 9.45 | 9.92 | 9.45 |
| UM1 | 14.05 | 14.05 | 14.05 | 14.76 | 14.05 |
| Triallyl cyanurate | 3.42 | 3.42 | 3.42 | 3.59 | 3.42 |
| Stabilizer 1 | 0.57 | 0.57 | 0.57 | 0.60 | 0.57 |
| Stabilizer 2 | 0.06 | 0.06 | 0.06 | 0.06 | 0.06 |
| PL21252 | 0.56 | 0.56 | 0.56 | 0.59 | 0.56 |
| FILCO 663P | 7.87 | 7.87 | 7.87 | 8.26 | 7.87 |
| Dynacoll 7150 | | | | | 4.56 |
| P84 NT | 4.56 | 4.56 | 4.56 | | |
| Polyethylene Powder | 2.85 | 2.85 | 2.85 | 2.99 | 2.85 |
| Maleic Acid | 0.11 | 0.11 | 0.11 | 0.12 | 0.11 |
| Saccharin | 0.34 | 0.34 | 0.34 | 0.36 | 0.34 |
| Acetyl Phenyl Hydrazine | 0.29 | 0.29 | 0.29 | 0.30 | 0.29 |
| Cumene Hydroperoxide | 1.48 | 1.48 | 1.48 | 1.56 | 1.48 |

| | | | | | |
|---|---|---|---|---|---|
| ¹Percentages by weight are based on the total weight of the solvent borne composition. | | | | | |

### Preparation Example 2: Curable Films

Each solvent-borne composition (S1-S5) was then cast onto siliconized polyester release liner (Hostaphan 2PRKN, 50 micron thick) using an Elcometer 4340 automatic film coater maintained with a coating plate temperature of 25°C. After coating, the ethyl acetate was allowed to evaporate by leaving the coated films at room temperature for 12 hours, followed by placing the coated films in an oven set at 110°C for 3 minutes. Dry-to-touch films F1 to F5 were obtained from compositions S1 to S5 respectively, the compositional details of said films (F1-F5) being provided in Table 2 below.

**Table 2**

| Ingredient | F1 (wt.%)² | F2 (wt.%)² | F3 (wt.%)² | F4 (wt.%)² | F5 (wt.%)² |
|---|---|---|---|---|---|
| BMIM-TFSI | 8.06 | | | | |
| BMIM-OT | | 8.06 | | 8.32 | 8.06 |
| EMIM-TFSI | | | 8.06 | | |
| Ethyl Acetate | | | | | |
| Butvar B-79 | 18.39 | 18.39 | 18.39 | 19.92 | 18.39 |
| SR210HH | 15.23 | 15.23 | 15.23 | 16.51 | 15.23 |
| UM1 | 22.66 | 22.66 | 22.66 | 24.57 | 22.66 |
| Triallyl cyanurate | 5.52 | 5.52 | 5.52 | 5.98 | 5.52 |
| Stabilizer 1 | 0.92 | 0.92 | 0.92 | 1.00 | 0.92 |
| Stabilizer 2 | 0.09 | 0.09 | 0.09 | 0.10 | 0.09 |
| PL21252 | 0.90 | 0.90 | 0.90 | 0.98 | 0.90 |
| FILCO 663P | 12.69 | 12.69 | 12.69 | 13.75 | 12.69 |
| Dynacoll 7150 | | | | | 7.35 |
| P84 NT | 7.35 | 7.35 | 7.35 | | |
| Polyethylene Powder | 4.60 | 4.60 | 4.60 | 4.98 | 4.60 |
| Maleic Acid | 0.18 | 0.18 | 0.18 | 0.20 | 0.18 |
| Saccharin | 0.55 | 0.55 | 0.55 | 0.60 | 0.55 |
| Acetyl Phenyl Hydrazine | 0.46 | 0.46 | 0.46 | 0.50 | 0.46 |
| Cumene Hydroperoxide | 2.39 | 2.39 | 2.39 | 2.60 | 2.39 |

| | | | | | |
|---|---|---|---|---|---|
| ²Percentages by weight are based on the total weight of the curable film. | | | | | |

### Example 1: Lap Shear Testing

The test substrate was stainless steel (*SUS 1.4301*), the surface of which had been cleaned with an ethyl acetate wipe. The substrate was provided at a thickness of 0.15 cm and pre-cut into six 2.5 cm x 10 cm (1" x 4") samples for tensile testing.

The adhesive transfer films (F1-F5) were removed from their release liners and applied to a first substrate surface: a second substrate was then applied thereto and the structure secured by clamping. The transferred films were then cured in the overlapping region by the application of the curing conditions stated in Table 3 below. The bonded structures were then stored at 25°C, 20% relative humidity for 24 hours prior to initial tensile testing.

Tensile lap shear (TLS) test was performed at room temperature based upon ASTM D3163-01 *Standard Test Method for Determining Strength of Adhesively Bonded Rigid Plastic Lap-Shear Joints in Shear by Tension Loading.* The bond overlapping area for each stated structure was 2.5 cm x 1.25 cm (1" x 0.5") with a bond thickness of 0.1 cm (40 mil). Three bonded structures were tested for each stated curing condition of the transferred adhesive films.

For each bonded structure, tensile lap shear strength was investigated after said 24 hour storage period both prior and subsequent to the application of a constant potential of 30V across the adhesive layer for a duration of 20 minutes. The averaged results are documented in Table 3 herein below.

**Table 3**

| Transfer Film | Curing Condition prior to 24 hours storage at 25°C | Initial Bond Strength (MPa) | Bond Strength after 30 V, 20 minutes (MPa) |
|---|---|---|---|
| F1 | 25°C, 20 minutes | 5.7 | 1.4 |
| F1 | 45°C, 20 minutes | 8.1 | 4.7 |
| F2 | 25°C, 20 minutes | 5.9 | 2.4 |
| F3 | 25°C, 20 minutes | 6.4 | 1.4 |
| F4 | 25°C, 20 minutes | 5.1 | 0.9 |
| F4 | 45°C, 20 minutes | 6.7 | 1.0 |
| F4 | 65°C, 20 minutes | 11.2 | 1.1 |
| F5 | 25°C, 20 minutes | 3.7 | 1.1 |
| F5 | 45°C, 20 minutes | 7.0 | 0.9 |
| F5 | 65°C, 20 minutes | 10.0 | 0.0 |

It is evident that increasing the curing temperature of the transfer films contributed to an increase in the initial bond strength. However electrochemically debonding was observed across the structures in which the transfer films were cured at the different stated temperatures.

In view of the foregoing description and examples, it will be apparent to those skilled in the art that equivalent modifications thereof can be made without departing from the scope of the claims.

## Claims

1. A curable and electrochemically debondable film adhesive comprising:
a) an ethylenically unsaturated monomer component, wherein said component comprises:
a1) at least one (meth)acrylate-functionalized macromonomer;
b) at least one radical generating initiator;
c) at least one cure accelerator;
d) at least one solid thermoplastic polyvinyl butyral resin;
e) non-polymerizable electrolyte; and,
optionally f) solubilizer.

2. The curable film adhesive according to claim 1 comprising, based on the weight of said curable film:
from 20 to 95 wt.% of a) said ethylenically unsaturated monomer component;
from 0.1 to 10 wt.% of b) said at least one radical generating initiator;
from 0.1 to 5 wt.% of c) said at least one cure accelerator;
from 5 to 50 wt.% of d) said at least one solid thermoplastic polyvinyl butyral resin;
from 0.1 to 30 wt.% of e) said non-polymerizable electrolyte; and,
from 0 to 10 wt.% of f) said solubilizer.

3. The curable film adhesive according to claim 1 comprising, based on the weight of said curable film:
from 20 to 80 wt.%, preferably from 20 to 60 wt.% of a) said ethylenically unsaturated monomer component;
from 0.1 to 5 wt.%, preferably from 0.5 to 4 wt.% of b) said at least one radical generating initiator;
from 0.1 to 3 wt.%, preferably from 0.5 to 2 wt.% of c) said at least one cure accelerator;
from 5 to 30 wt.% or from 5 to 20 wt.% of d) said at least one solid thermoplastic polyvinyl butyral resin;
from 1 to 20 wt.%, preferably from 3 to 15 wt.% of e) said non-polymerizable electrolyte; and,
from 0 to 5 wt.%, preferably from 0 to 2 wt.% of f) said solubilizer.

4. The curable film adhesive according to any one of claims 1 to 3 comprising, based on the weight of said curable film: from 5 to 30 wt.%, preferably from 5 to 20 wt.% of a1) said at least one (meth)acrylate-functionalized macromonomer.

5. The curable film adhesive according to any one of claims 1 to 4, wherein a1) said at least one (meth)acrylate-functionalized macromonomer comprises at least one (meth)acrylate ester corresponding to Formula (I): 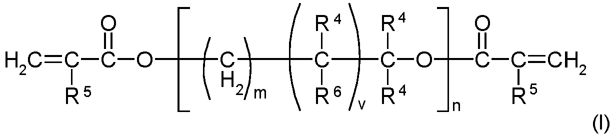 wherein:
R⁴ is hydrogen, C₁-C₄ alkyl or 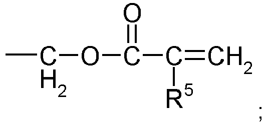
R⁵ is hydrogen, halogen, and C₁-C₄ alkyl;
R⁶ is hydrogen, hydroxy or 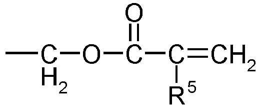
m is an integer ≥1, preferably from 1 to 8;
v is 0 or 1; and,
n is an integer n is ≥3, preferably from 3 to 30.

6. The curable film adhesive according to any one of claims 1 to 5, wherein a1) said at least one (meth)acrylate-functionalized macromonomer comprises at least one (meth)acrylate monomer corresponding to Formula (Ul):
[H₂C=C(R^{u})-C(O)-O-R^{v}-L-C(O)-NH-]ₙ-B (U1)
wherein:
n is an integer of from 2 to 6;
R^{u} is H, halogen or C₁ alkyl;
R^{v} is C₁-C₈ alkylene, C₆-C₁₈ arylene, C₇-C₁₈ alkylarylene or C₇-C₁₈ aralkylene;
L is -O- or -N(R^{w})-;
R^{w} is H or C₁-C₆ alkyl; and,
B is a polyvalent organic radical selected from alkyl, alkenyl, cycloalkyl, cycloalkenyl, aryl, alkaryl, alkaryl or heterocyclic radicals.

7. The curable film adhesive according to any one of claims 1 to 6, wherein said at least one radical generating initiator is selected from the group consisting of: cumene hydroperoxide (CHP); para-menthane hydroperoxide; t-butyl hydroperoxide (TBH); t-butyl perbenzoate; t-butyl peroxy pivalate; di-t-butyl peroxide; t-butyl peroxy acetate; t-butyl peroxy-2-hexanoate; t-amyl hydroperoxide; 1,2,3,4-tetramethylbutyl hydroperoxide; benzoyl peroxide; dibenzoyl peroxide; 1,3-bis(t-butylperoxyisopropyl) benzene; diacetyl peroxide; butyl 4,4-bis (t-butylperoxy) valerate; p-chlorobenzoyl peroxide; t-butyl cumyl peroxide; di-t-butyl peroxide; dicumyl peroxide; 2,5-dimethyl-2,5-di-t-butylperoxyhexane; 2,5-dimethyl-2,5-di-t-butyl-peroxyhex-3-yne; and, 4-methyl-2,2-di-t-butylperoxypentane.

8. The curable film adhesive according to any one of claims 1 to 7, wherein the or each polyvinyl butyral resin of the curable film adhesive is **characterized by**: a softening point of from 100 to 250°C; and, a weight average molecular weight (Mw) of from 40 to 170 kDa.

9. The curable film adhesive according to any one of claims 1 to 8, wherein said non-polymerizable electrolyte comprises or consists of a non-polymerizable salt of: ammonium; pyridinium; pyrrolidinium; phosphonium; imidazolium; oxazolium; guanidinium; or, thiazolium.

10. The curable film adhesive according to any one of claims 1 to 9, wherein said non-polymerizable electrolyte is selected from the group consisting of 1-ethyl-3-methyl-1H-imidazol-3-um methanesulfonate, 1-ethyl-3-methyl-1H-imidazol-3-um methyl sulfate, 1-hexyl-3-methylimidazolium 2-(2-fluoroanilino)-pyridinate, 1-hexyl-3-methylimidazolium imide, 1-butyl-1-methyl-pyrrolidinium 2-(2-fluoroanilino)-pyridinate, 1-butyl-1-methylpyrrolidinium imide, trihexyl (tetradecyl) phospholium 2-(2-fluoroanilino)-pyridinate, cyclohexyltrimethylammonium bis (trifluormethylsulfonyl) imide, di(2-hydroxyethyl) ammonium trifluoroacetate, N,N-dimethyl (2-hydroxyethyl) ammonium octanoate, methyltrioctylammonium bis (trifluoromethylsulfonyl) imide, tributylmethylammonium bis(fluorosulfonyl)imide, N-ethyl-N-N-N-N-tetramethylguanidinium trifluoromethanesulfonate, guanidinium trifluoromethanesulfonate, 1-butyl-4-methylpyridinium bromide, 1-butyl-3-methylpyridinium tetrafluoroborate, 1-butyl-3-hydroxymethylpyridinium ethylsulfate, N-propyl-N-methylpyrrolidinium bis(fluorosulfonyl) imide, 1-butyl-1-methylpyrrolidinium bis(trifluoromethylsulfonyl) imide, 1-butyl-methylpyrrolidinium tris (pentafluoroethyl) trifluorophosphate, 3-methyl imidazolium ethylsulfate, 1-ethyl-3-methylimidazolium chloride, 1-ethyl-3-ethyl-methylimidazolium bromide, 1-butyl-3-methylimidazolium chloride, 1-hexyl-3-methylimidazolium chloride, 1-octyl-3-methylimidazolium chloride, 1-methyl-3-octylimidazolium chloride, 1-propyl-3-methylimidazolium iodide, 1-butyl-3-methylimidazolium tetrafluoroborate, 1-butyl-3-methylimidazolium methyl sulfate, 1-butyl-3-methylimidazolium methanesulfonate, 1-butyl-3-methylimidazolium trifluoromethanesulfonate, 1-butyl-3-methylimidazolium hexafluorophosphate, 1-ethyl-3-methylimidazolium bis(trifluoromethylsulfonyl)imide, 1-butyl-3-methylimidazolium bis(trifluoromethylsulfonyl)imide, 1-ethyl-3-methylimidazolium trifluoromethanesulfonate, 1-butyl-3-methylimidazolium bis(fluorosulfonyl)imide, 1-ethyl-3-methylimidazolium bis(fluorosulfonyl)imide, 1-butyl-3-methyl-imidazolium-fluorosulfonate, 1-dodecyl-3-methylimidazolium bis(fluorosulfonyl)imide, 1-butyl-2,3-dimethylimidazolium tetrafluoroborate, 1-butyl-2,3-dimethylimidazolium hexafluorophosphate, 1-butylimidazol, 1-methylimidazolium tetrafluoroborate, tributylmethylphosphonium bis(fluorosulfonyl)imide, tetrabutylphosphonium tris (pentafluoroethyl) trifluorophosphate, trihexyl(tetradecyl)phosphonium bis(trifluoromethylsulfonyl)imide, trihexyl (tetradecyl) phosphonium tetrafluoroborate, tributylmethylphosphonium methyl sulfate and mixtures thereof.

11. The curable film adhesive according to any one of claims 1 to 9, wherein said non-polymerizable electrolyte is selected from the group consisting of: trihexyl(tetradecyl)phosphonium bis(trifluoromethylsulfonyl)imide; tributylmethylphosphonium bis(fluorosulfonyl) imide; tributylmethyl- phosphonium methyl sulfate; tributylmethylammonium bis(fluorosulfonyl)imide; N-propyl-N-methylpyrrolidinium bis(fluorosulfonyl) imide; 1-ethyl-3-methyl-1H-imidazol-3-um methyl sulfate; 1-ethyl-3-methyl-1H-imidazol-3-um methanesulfonate; 1-ethyl-3-methylimidazolium trifluoromethanesulfonate; 1-ethyl-3-methylimidazolium bis(trifluoromethylsulfonyl)imide; 1-butyl-3-methylimidazolium methyl sulfate; 1-butyl-3-methylimidazolium methanesulfonate; 1-butyl-3-methyl-imidazolium-fluorosulfonate; 1-butyl-3-methylimidazolium trifluoromethanesulfonate; 1-butyl-3-methylimidazolium bis(trifluoromethylsulfonyl)imide; 1-butyl-3-methylimidazolium bis(fluorosulfonyl)imide; 1-dodecyl-3-methylimidazolium bis(fluorosulfonyl)imide; and, mixtures thereof.

12. An article (A) comprising a curable film as defined in any one of claims 1 to 11, wherein said film is disposed on a release liner and / or a carrier substrate.

13. The article (A) according to claim 12 which is a single-sided tape, a transfer tape or a double-sided tape.

14. A bonded structure comprising:
a first substrate having an electrically conductive surface; and,
a second substrate having an electrically conductive surface,
wherein a cured film obtained from the curable film adhesive as defined in any one of claims 1 to 11 is disposed between the electrically conductive surfaces of the first and second substrates.

15. A method of debonding said bonded structure according to claim 14, the method comprising the steps of:
1) applying a voltage across the electrically conductive surfaces to form an anodic interface and a cathodic interface; and,
2) debonding the surfaces.

16. The method according to claim 15, wherein the voltage applied in step 1) is: from 0.5 to 200 V; and, applied for a duration of from 1 second to 60 minutes.
